# EUROPEAN PATENT APPLICATION

(11) **EP 2 916 556 A1**
(43) Date of publication of application: **09.09.2015**
(21) Application number: 13850765.2
(22) Date of filing: 21.08.2013
(51) Int. Cl.: H04N 21/2668, H04N 21/254, H04N 21/4782, H04N 21/81, G06Q 30/02, H04N 21/234

(54) **IPTV ADVERTISEMENT DISTRIBUTION METHOD AND SYSTEM**

(30) Priority: 31.10.2012 CN 201210424339
(71) Applicant: ZTE Corporation, Shenzhen, Guangdong 518057 (CN)
(72) Inventor: YU, Moushan, Shenzhen Guangdong 518057 (CN)
(74) Representative: Brunazzi, Stefano
(86) International application number: PCT/CN2013/081962
(87) International publication number: WO 2014/067323

(57) **Abstract**

Provided are a method and system for distributing an IPTV advertisement. The method comprises: an advertisement-content management component binds advertisement contents with network TV programs provided by an IPTV-capable service platform and generates advertisement policies, the advertisement policies comprising a correspondence between the network TV programs and advertisement page addresses; a set-top box sends information of the network TV program requested by a user to a message engine component; the message engine component sends the advertisement page address to the set-top box according to an advertisement policy corresponding to the requested network TV program; and the set-top box obtains the advertisement content according to the advertisement page address, and plays the advertisement content together with the network TV program. The system comprises an advertisement-content management component, a message engine component and a set-top box. By means of the present invention, advertisement policy management and distribution are implemented without modifying the EPG template for an IPTV service such that advertisement content is related to factors affecting advertisement distribution such as the content, time, and user group of a network TV program.

## Description

### TECHNICAL FIELD

The present invention relates to the technical field of Internet Protocol Television (IPTV), especially relates to a method and system for distributing an IPTV advertisement.

### BACKGROUND

As Internet Protocol (IP) technology develops and broadband networks become popular, IPTV, as a new service developing rapidly in the globe in recent years, integrates the advantages of IP technology and TV (Television) technology and provides a new development opportunity for television services.

Traditional TV programs are played wirelessly or by means of a coaxial cable, while the IPTV system provides TV programs and video contents of high quality to a user directly by an IP broadband network, which integrates traditional TV services and the communication service of Internet, providing to the user multiple services such as live TV, time-shifted TV, video-on-demand, information browsing and inquiry, music/karaoke, interactive advertisements, games, video communications, and communities. These services are integrated together via a set-top box such that timely, convenient and abundant experiences can be provided. A user has not only watched TV passively, but also can initiatively select and control the TV contents. After the way in which the TV is watched, the most benefited advertisement services in the traditional TV services also have an unprecedented development platform.

At present, the implementation based on IPTV is that advertisement distribution implements advertisements mainly by modifying and defining an EPG (electronic program guide) template. When the user is playing a program, the EPG template obtains advertisements for an advertisement platform according to the attributes of an advertising position defined in advance. Because of the over dependence of advertisement distribution on the EPG template, and the definition in advance at the same time, advertisement content is less related to the indexes influencing advertisement distribution, such as the played content and time of a video. Meanwhile, because of the limitation of the template, the interaction between a user and IPTV advertisements is difficult to be implemented.

### SUMMARY

A technical problem to be addressed by the embodiments of the present invention is to provide a method and system for distributing an IPTV advertisement to implement the management and distribution of advertisements without modifying the EPG template for IPTV services.

A method for distributing an IPTV advertisement provided by an embodiment of the present invention comprises:
a step 1, an advertisement-content management component binds advertisement contents to a network TV programs provided by an IPTV-capable service platform and generates advertisement policies, the advertisement policies comprising correspondences between the network TV programs and advertisement page addresses;
a step 2, when a user initiates a network TV program request to the IPTV-capable service platform via a set-top box, the set-top box sends information of the requested network TV program to a message engine component; the message engine component sends an advertisement page address to the set-top box according to an advertisement policy corresponding to the requested network TV program; and
a step 3, the set-top box obtains advertisement content according to the advertisement page address, and plays the advertisement content together with the network TV program.

Preferably, the step 2 also comprises:
the set-top box sending the information of a current network TV program to the message engine component when the user initiatively requests to play the advertisement content via the set-top box; the message engine component sending the advertisement page address to the set-top box according to the advertisement policy corresponding to the current network TV program.

Preferably, the step 1 particularly comprises:
The advertisement-content management component extracting basic information from the network TV program provided by the IPTV-capable service platform; the basic information comprising: a program source, a user group and playing time;
for different basic information, different advertisement contents being bound with the different network TV program respectively to obtain the correspondence between the network TV programs and the advertisement page addresses, i.e., the advertisement policies.

Preferably, the step 3 particularly comprises:
the main window of the browser of the set-top box playing the network TV program obtained from the IPTV-capable service platform, and at the same time or after delaying a set time, the advertisement window of the browser of the set-top box obtaining and playing the advertisement content according to the advertisement page address.

Preferably, the method also comprises:
a step 4, a statistic component collecting statistics on the playing and operating data of the advertisement content according to the advertisement policy generated by the advertisement-content management component and its corresponding advertisement content.

An embodiment of the present invention further provides a system for distributing an IPTV advertisement which comprises:
an advertisement-content management component configured to bind advertisement contents to network TV programs provided by an IPTV-capable service platform to generate advertisement policies and send the same to a message engine component, the advertisement policies comprising the correspondences between the network TV programs and an advertisement page addresses;
a message engine component configured to, when a user sends a network TV program request to the IPTV-capable service platform via a set-top box, the set-top box send the advertisement page address to a set-top box according to the advertisement policy corresponding to the requested network TV program;
a set-top box configured to send information of the requested network TV program to the message engine component; and obtain the advertisement content according to the advertisement page address, and play the advertisement content together with the network TV program.

Preferably, the set-top box is further configured to send the current network TV program information to the message engine component when the user initiatively requests to play the advertisement content via the set-top box;
the message engine component is further configured to: send the advertisement page address to the set-top box according to the advertisement policy corresponding to the current network TV program.

Preferably, the advertisement-content management component comprises:
a basic information extraction component configured to extract basic information from the network TV program provided by the IPTV-capable service platform; the basic information comprising: a program source, a user group and playing time;
an advertisement policy generation component configured to bind different advertisement contents with the network TV programs for different basic information, thus obtaining the correspondence between the network TV programs and the advertisement page addresses;
a dedicated server configured to store the advertisement content.

Preferably, the set-top box is particularly configured to:
the network TV program obtained from the IPTV-capable service platform is played at the main window of the browser of the set-top box, and at the same time or after delaying a set time, the advertisement content is obtained and played at the advertisement window of the browser of the set-top box according to the advertisement page address.

Preferably, the system also comprises:
a statistic component configured to carry out statistics on the playing and operating data of the advertisement content according to the advertisement policy generated by the advertisement-content management component and its corresponding advertisement content.

Adopting the above technical solution, the embodiments of the present invention have at least the following advantages:
the method and system for distributing the IPTV advertisement described in the embodiments of the present invention implement the management and distribution of an advertisement policy without modifying the EPG template for IPTV services; since the embodiments of the present invention support a user to initiatively request to play advertisement content via a set-top box, the interaction between the advertisement content and the user; since the embodiments of the present invention generate different advertisement policies for different basic information on network TV programs, advertisement content is related to the factors affecting advertisement distribution such as the content, time, and user group of a network TV program.

### BRIEF DESCRIPTION OF DRAWINGS

Figure 1 is a flow chart of a method for distributing an IPTV advertisement in a first embodiment of the present invention.
Figure 2 is a flow chart of a method for distributing an IPTV advertisement in a second embodiment of the present invention.
Figure 3 is a flow chart of a method for distributing an IPTV advertisement in a third embodiment of the present invention.
Figure 4 is a structural schematic diagram of a system for distributing an IPTV advertisement in a fourth and fifth embodiments of the present invention.
Figure 5 is a structural schematic diagram of a system for distributing an IPTV advertisement in a sixth embodiment of the present invention.
Figure 6 is a structural schematic diagram of a system for distributing an IPTV advertisement in a first application example of an embodiment of the present invention.
Figure 7 is a schematic diagram of a process for distributing an IPTV advertisement in a second application example of an embodiment of the present invention.
Figure 8 is a schematic diagram of a process for distributing an IPTV advertisement in a third application example of an embodiment of the present invention.

### DESCRIPTION OF EMBODIMENTS

In order to further describe the technical means adopted by the present invention to achieve the pre-set aim, and efficacy thereof, the embodiment of the present invention is described in detail with reference to the accompanying drawings and their better embodiments hereinafter.

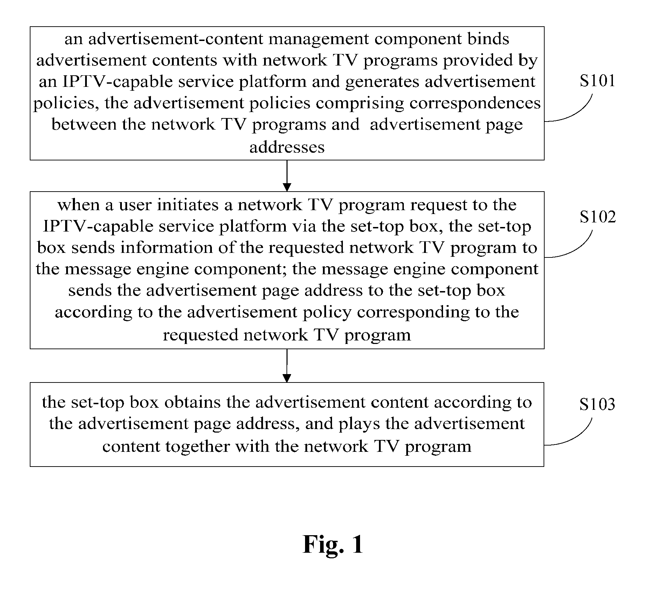

In the first embodiment of the present invention, a method for distributing an IPTV advertisement is shown in Figure 1, and the method comprises the following steps.

In step S101, an advertisement-content management component binds advertisement contents with network TV programs provided by an IPTV-capable service platform and generates advertisement policies, the advertisement policies comprising correspondences between the network TV programs and advertisement page addresses.

In particular, the step S101 comprises the following processes.

A1: the advertisement-content management component extracts basic information from a network TV program provided by the IPTV-capable service platform; the basic information comprising: a program source, a user group and playing time etc.

A2: For different basic information, different advertisement contents are bound with the different network TV programs to obtain the correspondences between the network TV programs and the advertisement page addresses, i.e., the advertisement policies.

In step S102, when a user initiates a network TV program request to the IPTV-capable service platform via the set-top box, the set-top box sends information of the requested network TV program to the message engine component; the message engine component sends the advertisement page address to the set-top box according to the advertisement policy corresponding to the requested network TV program. The network TV program information comprises a program ID and a set-top box terminal ID etc.

In step S103, the set-top box obtains the advertisement content according to the advertisement page address, and plays the advertisement content together with the network TV program.

In particular, a main window of a browser of the set-top box plays the network TV program obtained from the IPTV-capable service platform, and at the same time or after delaying a set time, an advertisement window of the browser of the set-top box obtains and plays the advertisement content according to the advertisement page address. The advertisement window may overlap on the main window to display in translucence. The transparency may be included in the advertisement policy. Different transparencies are set according to different advertisement contents.

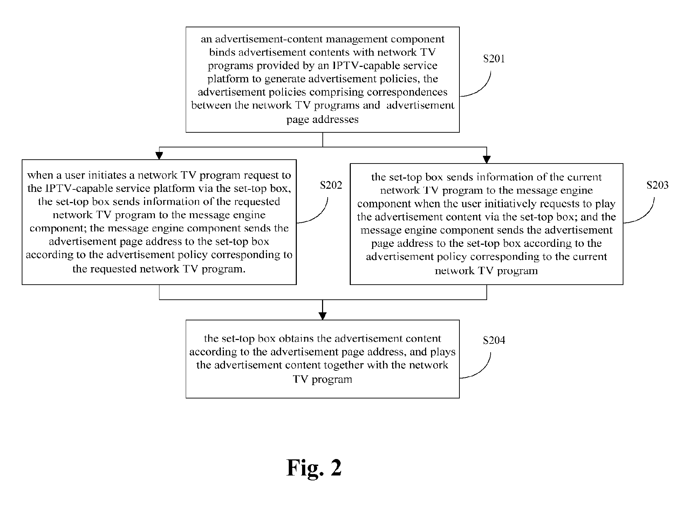

In the second embodiment of the present invention, a system for distributing an IPTV advertisement is shown in Figure 2, and the system comprises the following specific steps.
a step S201, an advertisement-content management component binds advertisement contents with network TV programs provided by an IPTV-capable service platform to generate advertisement policies, the advertisement policies comprising correspondences between the network TV programs and advertisement page addresses.

In particular, the step S201 comprises the following processes:
A1: the advertisement-content management component extracts basic information from the network TV program provided by the IPTV-capable service platform; the basic information comprising: a program source, a user group and playing time etc.
A2: For different basic information, different advertisement contents are bound with the different network TV programs to obtain a correspondence between the network TV programs and the advertisement page addresses.

In step S202, when a user initiates a network TV program request to the IPTV-capable service platform via the set-top box, the set-top box sends information of the requested network TV program to the message engine component; the message engine component sends the advertisement page address to the set-top box according to the advertisement policy corresponding to the requested network TV program. The network TV program information comprises a program ID and a set-top box terminal ID etc.

In the step S203, the set-top box sends information of the current network TV program to the message engine component when the user initiatively requests to play the advertisement content via the set-top box; and the message engine component sends the advertisement page address to the set-top box according to the advertisement policy corresponding to the current network TV program.

It should be noted that what is recorded in the step S202 and the step S203 is two triggering modes for sending an advertisement page address to a set-top box according to an advertisement policy.

In step S204, the set-top box obtains the advertisement content according to the advertisement page address, and plays the advertisement content together with the network TV program.

In particular, a main window of the browser of the set-top box plays the network TV program obtained from the IPTV-capable service platform, and at the same time or after delaying a set time, an advertisement window of the browser of the set-top box obtains and plays the advertisement content according to the advertisement page address. The advertisement window may overlap on the main window to display in translucence. The transparency may be included in the advertisement policy. Different transparencies are set according to different advertisement contents.

In the third embodiment of the present embodiment, the embodiment is approximately the same with the second embodiment, and the difference lies in that the method for distributing the IPTV advertisement provided by the embodiment further comprises: collecting statistics on the playing and operating data of the advertisement content according to the advertisement policy generated by the advertisement-content management component and the actual playing situation of the advertisement content to provide analytical data for advertisement service operation.

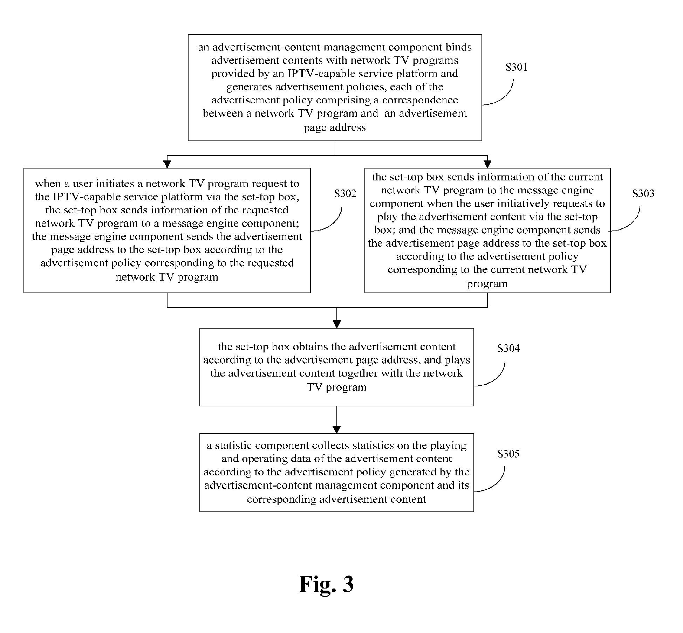

As shown in Figure 3, a method for distributing an IPTV advertisement, comprises the following specific steps.

In a step S301, an advertisement-content management component binds advertisement contents with network TV programs provided by an IPTV-capable service platform and generates advertisement policies, each of the advertisement policy comprising a correspondence between a network TV program and an advertisement page address.

In a step S302, when a user initiates a network TV program request to the IPTV-capable service platform via the set-top box, the set-top box sends information of the requested network TV program to a message engine component; the message engine component sends the advertisement page address to the set-top box according to the advertisement policy corresponding to the requested network TV program. The network TV program information comprises a program ID and a set-top box terminal ID etc.

In a step S303, the set-top box sends information of the current network TV program to the message engine component when the user initiatively requests to play the advertisement content via the set-top box; and the message engine component sends the advertisement page address to the set-top box according to the advertisement policy corresponding to the current network TV program.

It should be noted that what is recorded in the step S302 and the step S303 is two triggering modes for sending an advertisement page address to a set-top box according to an advertisement policy.

In a step S304, the set-top box obtains the advertisement content according to the advertisement page address, and plays the advertisement content together with the network TV program.

In a step S305, a statistic component collects statistics on the playing and operating data of the advertisement content according to the advertisement policy generated by the advertisement-content management component and its corresponding advertisement content.

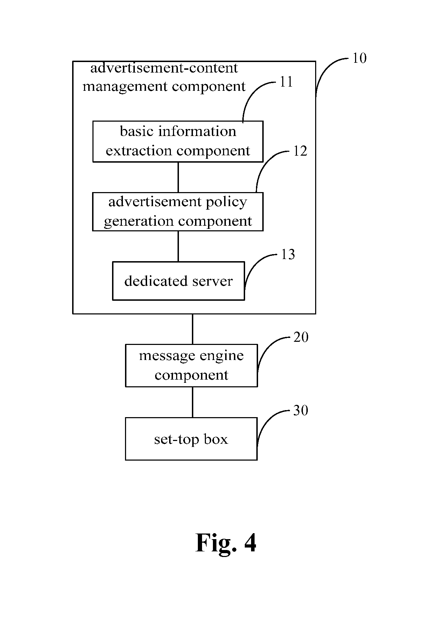

In the fourth embodiment of the present invention, a system for distributing the IPTV advertisement, which is as shown in Figure 4, comprises the following constituent parts.
1) An advertisement-content management component 10 is configured to bind advertisement contents with network TV programs provided by an IPTV-capable service platform, to generate advertisement policies and send it to a message engine component, each of the advertisement policies comprising a correspondence between the network TV program and an advertisement page address.

In particular, the advertisement-content management component 10 comprises the following components.

A basic information extraction component 11 is configured to extract basic information from the network TV program provided by the IPTV-capable service platform. The basic information comprising: a program source, a user group and playing time.

An advertisement policy generation component 12 is configured to, for different basic information, bind different advertisement contents with the network TV programs to obtain a correspondence between the network TV programs and the advertisement page addresses.

A dedicated server 13 is configured to store the advertisement content.
2) A message engine component 20 is configured to send the advertisement page address to a set-top box 30 according to the advertisement policy corresponding to the requested network TV program when a user initiates a network TV program request to the IPTV-capable service platform via a set-top box 30;
3) A set-top box 30 is configured to send the information of the requested network TV program to the message engine component 20, to obtain the advertisement content according to the advertisement page address, and to play the advertisement content together with the network TV program, wherein the network TV program information comprises program ID and a set-top box terminal ID etc.

In particular, the main window of the browser of the set-top box 30 plays the network TV program obtained from the IPTV-capable service platform, and at the same time or after delaying a set time, the advertisement window of the browser of the set-top box 30 obtains and plays the advertisement content according to the advertisement page address. The advertisement window may overlap on the main window to display in translucence. The transparency may be included in the advertisement policy. Different transparencies are set according to different advertisement contents.

In the fifth embodiment of the present invention, as shown in Figure 4, the embodiment is approximately the same with the fourth embodiment, and the difference lies in that in the system for distributing the IPTV advertisement of the embodiment, the set-top box 30 is further configured to send information of the current network TV program to the message engine component 20 when the user initiatively requests to play the advertisement content via the set-top box 30, the network TV program information comprising a program ID and a set-top box ID etc..

The message engine component 20 is further configured to send the advertisement page address to the set-top box 30 according to the advertisement policy corresponding to the current network TV program.

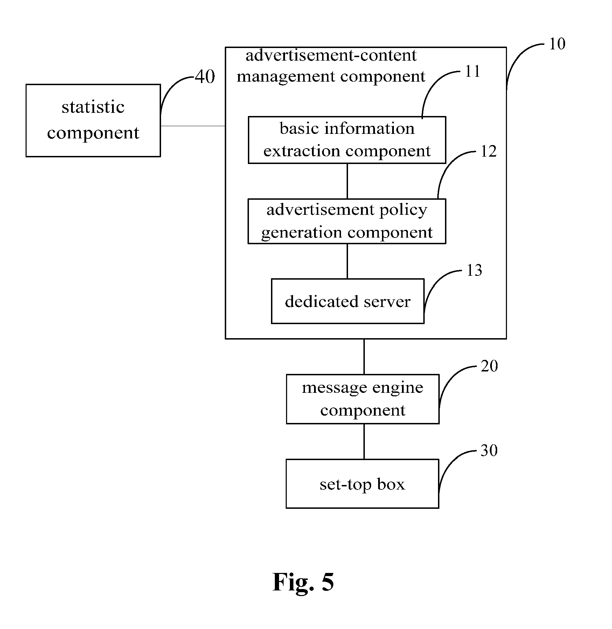

In the sixth embodiment of the present invention, as shown in Figure 5, the embodiment is approximately the same with the fifth embodiment, and the difference lies in that the system for distributing the IPTV advertisement of the embodiment further comprises the following components.

A statistic component 40 is configured to collect statistics on the playing and operating data of the advertisement content according to the advertisement policy generated by the advertisement-content management component 10 and its corresponding advertisement content.

Three application examples of the technical solutions of the embodiments of the present invention are presented based on the first to the sixth embodiments of the present invention hereinafter.

### The First Application Example

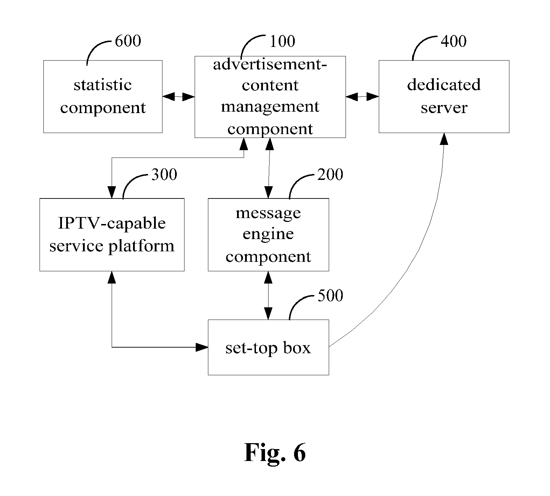

As shown in Figure 6, a system for distributing an IPTV advertisement according to an embodiment of the present invention comprises: an advertisement-content management component 100 and its dedicated server 400, a message engine component 200, an IPTV-capable service platform 300, a set-top box 500 and a statistic component 600. In particular, the functions and interactions that the various components complete are as follows.

An advertisement-content management component 100 is configured to obtain basic information of the network TV program from the IPTV-capable service platform 300; for different basic information, to bind different advertisement contents with the network TV programs respectively to obtain a correspondence between the network TV programs and the advertisement page addresses, i.e., advertisement policies; to send the advertisement policies to the message engine component 200 in advance prior to the network TV program reaching playing time. The basic information comprises: a program source, a user group and playing time, wherein the program source may be a live program source or an on-demand program source, and each program source corresponds to a unique program ID.

The advertisement content is stored in the dedicated server 400 of the advertisement-content management component 100, which is implemented mainly by the page address. The advertisement page address corresponds to a page written in Web script languages such as HTML (Hyper Text Markup Language), CSS (Cascading Style Sheet) and JavaScript and compatible with the playing of the browser of a set-top box, and the content may contain the combined page of images, words, FLASH and videos.

In addition, the advertisement-content management component 100 may be further configured to provide an administrator with a platform for managing the submission and review etc. of advertisement content, and managing the establishing and review etc. of an advertisement distribution contract.

The message engine component 200 is provided between the advertisement-content management component 100 and the set-top box 500, and is configured to receive the advertisement policies sent by the advertisement-content management component 100 by an Internet protocol-based massage, such as an HTTP (Hyper Text Transfer Protocol) massage etc.

According to the playing time of the network TV program in the advertisement policies, the advertisement-content management component 100 sends the advertisement policies to the message engine component 200. The message engine component 200 saves the advertisement policies.

For example, during 8:00 - 9:00 every day from 1, August to 10 August 2012, live channel 1 needs to be bound with a triggering value added advertisement service 1. Then the message engine component at least needs to keep the above information until the expiry date 10 August, and then deletes an advertisement policy corresponding to the above information.

The message engine component 200 buffers advertisement policies by time period and deletes expiry advertisement policies periodically. When the set-top box 500 sends the program ID and the set-top box terminal ID for obtaining advertisement content bound, the message engine component 200 seeks a corresponding advertisement policy according to the program ID, and sends the advertisement page address of which to the set-top box 500. The set-top box 500 obtains the advertisement content for representation from the dedicated server 400 of the advertisement-content management component 100.

IPTV-capable service platform 300 is configured to provide IPTV basic services for the set-top box 500, and provide to the advertisement-content management component 100 the basic information required for advertisement distribution.

The set-top box 500 is configured to obtain the advertisement page address from the message engine component 200, and obtain an advertisement page for representation to a user from the dedicated server 400 of the advertisement-content management component 100.

More preferably, the set-top box 500 is a set-top box having a multi-window browser, and is provided with a remote control with information keys.

The set-top box 500 may implement a multi-window browser, and an advertisement window is added on the basis of the original main window. The main window is responsible for the playing of the program information demanded by a user, and the advertisement window is responsible for the implementation of the superimposing representation of value added advertisement services. The remote control with information keys is able to activate the information representation of the value added advertisement, thus implementing the interaction with a user.

The set-top box 500 enters a mode of an on-demand program, and the set-top box initiates request information that the terminal enters the mode of the on-demand program at present to the message engine component 200 according to the triggering mode. The request information comprises the information such as the on-demand program ID which the terminal (i.e., the set-top box) intends to play on-demand and the terminal ID. The message engine component 200 inquires the advertisement policy of the program according to the on-demand program ID reported by the terminal to see whether there is corresponding advertisement content. If there is, the advertisement page address and triggering time of the advertisement content are returned to the terminal.

The triggering mode of the set-top box 500 may be triggered by switching program contents or by pressing the information keys.

In the case where the triggering mode is triggered by switching program contents, the set-top box 500 sets a timer based on the triggering time, typically 30 seconds. When the timer reaches the time, the advertisement page address is obtained from the message engine component 200, and then the advertisement content is accessed corresponding to the advertisement page address. When the advertisement content is represented, the user may also perform relevant operations, such operation as page down, cancelling and confirming, by the remote control of the set-top box. The advertisement window is closed when the page is cancelled. After the cancelling, the page also may call out the advertisement window again by some key (which can be set) of the remote control.

For the representation of the advertisement content, it is overlapped in translucence on the content being played, the transparency is determined by the advertisement content, which may be included in the advertisement policy and does not influence the playing of the content of the network TV program.

The statistic component 600 is configured to extract an advertisement policy from the advertisement-content management component 100, obtain corresponding advertisement content from the dedicated server 400 of the advertisement-content management component 100, and collect statement statistics on the playing and operating data of advertisement to provide analytical data for advertisement service operation.

### Second Application Example

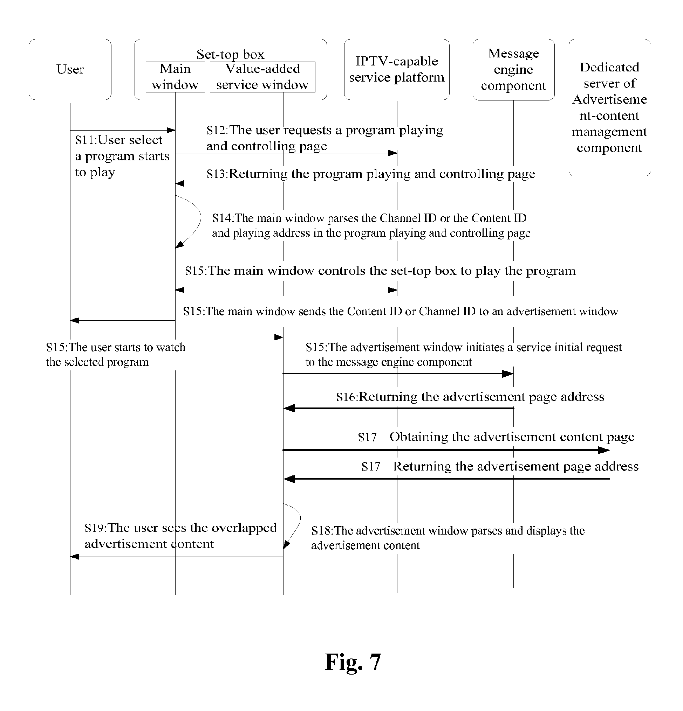

As shown in Figure 7, a service process that an advisement is played automatically when a user starts to watch a live channel or an on-demand program includes the following.

In step S11, the user enters the page of the live channel or the on-demand program by an EPG page or directly pressing a number key to watch a program.

In step S12, the main window of the browser of the set-top box initiates a request for obtaining a program-playing and controlling page to the IPTV-capable service platform.

In step S 13, the IPTV-capable service platform returns the program-playing and controlling page for the live channel or on-demand program.

In step S14, the main window of the browser of the set-top box parses the program-playing and controlling page returned by the IPTV-capable service platform to obtain the Channel ID of the live channel or the Content ID of the on-demand program that are accessed by the user as well as corresponding program playing address from the page.

In step S15, the user starts to watch the selected network TV program, the advertisement window communicates with the main window according to the interface provided by the main window, obtains the Channel ID of the live channel or the Content ID of the on-demand program, and carries them together with the ID of the set-top box terminal in the service initial request and reports them to the message engine component;

In step S16, the message engine component returns corresponding advertisement page address to the advertisement window of the browser of the set-top box according to the Channel ID of the live channel or the Content ID of the on-demand program.

In step S17, the advertisement window obtains an advertisement content page from the dedicated server of the advertisement-content management component.

In step S18, the advertisement window parses the returned advertisement content page, and verifies that the page comes from a trustworthy server, then allows the page to call and extend JavaScript objects to control and display the video-overlap advertisement content.

In step S19, the advertisement window displays in an overlap manner the advertisement content on the main window.

### Third Application Example 3

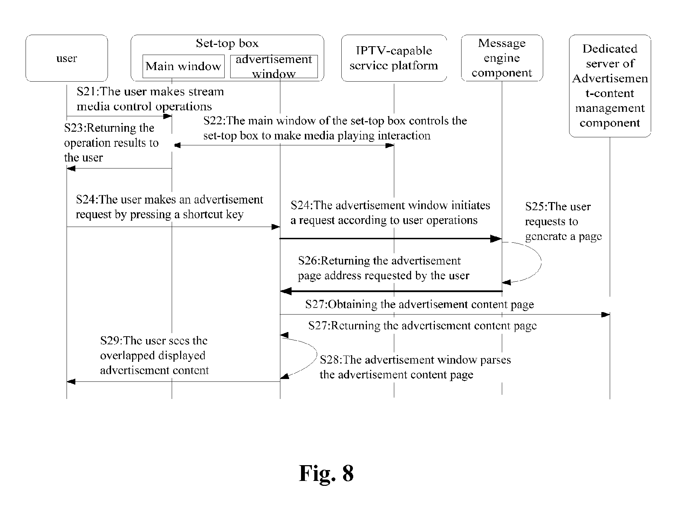

As shown in Figure 8, an interaction process of a value-added service, i.e., advertisement content when a user starts to watch a live channel or an on-demand program is described hereafter.

In step S21, during watching a video, the user uses the basic video service functions such as Fast Forward and Fast Backward, Pause/Resume, Positioned Play on the remote control of the set-top box.

In step S22, the main window of the browser of the set-top box passes the operating key values for the user-basic services to the playing and controlling page, the playing and controlling page controls the interaction of stream media playing of the set-top box with the IPTV-capable service platform.

In step S23, the user sees the corresponding operation results by the main window of the browser and the set-top box player etc..

During watching a video, the user carries out service interaction by the interactive keys defined by advertisement services such as the information keys on the remote control according to the prompt of the video-overlap added-value advertisement services, and the process is as follows.

In a step S24, after receiving the user key value, the advertisement window of the browser of the set-top box passes the key value to the value-added service page, the value-added service page initiates a user request to the message engine component by running JavaScript script, wherein the user request comprises the present network TV program ID and the set-top box terminal ID etc..

In a step S25, the message engine component parses parameters according to the request initiated by the advertisement window of the set-top box, and verifies the identity of the user, and obtains the advertisement page address corresponding to the program ID of the present network TV program in the advertisement policy in the period of time.

In a step S26, the message engine component returns the advertisement page address to the advertisement window.

In a step S27, the advertisement window obtains the advertisement content page from the dedicated server of the advertisement-content management component.

In a step S28, the advertisement window parses the returned advertisement content page, and verifies that the page comes from a trustworthy server, then allows the page to call and extend JavaScript objects to control and display the video-overlap advertisement content.

In a step S29, the advertisement window displays in an overlap manner the advertisement content on the main window.

By the description of the particular embodiments, deeper and particular understanding of the technical means adopted by the present invention to achieve the pre-set aim and efficacy thereof should be gotten, but the accompanying drawings are merely for providing references and explanation rather than limit the present invention.

## Claims

1. A method for distributing an Internet Protocol Television (IPTV) advertisement, **characterized by** comprising:
a step 1, an advertisement-content management component binding advertisement contents with network TV programs provided by an IPTV-capable service platform to generate advertisement policies, the advertisement policies comprising correspondences between the network TV programs and advertisement page addresses;
a step 2, when a user initiates a network TV program request to the IPTV-capable service platform via a set-top box, the set-top box sending information of the requested network TV program to a message engine component, and the message engine component sending an advertisement page address to the set-top box according to an advertisement policy corresponding to the requested network TV program; and
step 3, the set-top box obtaining advertisement content according to the advertisement page address, and playing the advertisement content together with the network TV program.

2. The method for distributing the IPTV advertisement according to claim 1, **characterized in that** the step 2 further comprises:
when the user initiatively requests to play the advertisement content via the set-top box, the set-top box sending information of the current network TV program to the message engine component, and the message engine component sending the advertisement page address to the set-top box according to the advertisement policy corresponding to the current network TV program.

3. The method for distributing the IPTV advertisement according to claim 1, **characterized in that** the step 1 comprises:
the advertisement-content management component extracting basic information from the network TV program provided by the IPTV-capable service platform, the basic information comprising: a program source, a user group and playing time; and
for different basic information, binding different advertisement contents with different network TV programs respectively to obtain the correspondences between the network TV programs and the advertisement page addresses, i.e., the advertisement policies.

4. The method for distributing the IPTV advertisement according to claim 1, **characterized in that** the step 3 comprises:
a main window of a browser of the set-top box playing the network TV program obtained from the IPTV-capable service platform, and at the same time or after delaying a set time period, an advertisement window of the browser of the set-top box obtaining and playing the advertisement content according to the advertisement page address.

5. The method for distributing the IPTV advertisement according to any one of claims 1 to 4, **characterized in that** the method further comprises:
a step 4, a statistic component collecting statistics on playing and operating data of the advertisement content according to the advertisement policy generated by the advertisement-content management component and the advertisement content corresponding to the advertisement policy.

6. A system for distributing an Internet Protocol Television (IPTV) advertisement, **characterized by** comprising:
an advertisement-content management component configured to bind advertisement contents with network TV programs provided by an IPTV-capable service platform, to generate advertisement policies, and to send the advertisement policies to a message engine component, the advertisement policies comprising correspondences between the network TV programs and the advertisement page addresses;
a message engine component configured to, when a user initiates a network TV program request to the IPTV-capable service platform via a set-top box, send the advertisement page address to the set-top box according to an advertisement policy corresponding to the requested network TV program; and
a set-top box configured to send information of the requested network TV program to the message engine component, and to obtain the advertisement content according to the advertisement page address and play the advertisement content together with the network TV program.

7. The system for distributing the IPTV advertisement according to claim 6, **characterized in that** the set-top box is further configured to, when the user initiatively requests to play the advertisement content via the set-top box, send information of the current network TV program to the message engine component; and
the message engine component is further configured to: send the advertisement page address to the set-top box according to the advertisement policy corresponding to the current network TV program.

8. The system for distributing the IPTV advertisement according to claim 6, **characterized in that** the advertisement-content management component comprises:
a basic information extraction component configured to extract basic information from the network TV program provided by the IPTV-capable service platform, the basic information comprising: a program source, a user group and playing time;
an advertisement policy generation component configured to, for different basic information, bind different advertisement contents with different network TV programs to obtain the correspondences between the network TV programs and the advertisement page addresses; and
a dedicated server configured to store the advertisement content.

9. The system for distributing the IPTV advertisement according to claim 6, **characterized in that** the set-top box is configured to:
play the network TV program obtained from the IPTV-capable service platform at a main window of a browser of the set-top box, and at the same time or after delaying a set time period, obtain and play the advertisement content at an advertisement window of the browser of the set-top box according to the advertisement page address.

10. The system for distributing the IPTV advertisement according to any one of claims 6 to 9, **characterized in that** the system further comprises:
a statistic component configured to collect statistics on playing and operating data of the advertisement content according to the advertisement policy generated by the advertisement-content management component and the advertisement content corresponding to the advertisement policy.
